# EUROPEAN PATENT SPECIFICATION

(11) **EP 3 661 766 B1**
(45) Date of publication and mention of the grant of the patent: **01.05.2024**
(21) Application number: 18762140.4
(22) Date of filing: 01.08.2018
(51) Int. Cl.: B60C 11/16, B60C 11/03, B60C 11/11

(54) **TYRE FOR VEHICLE WHEELS**
REIFEN FÜR FAHRZEUGRÄDER
PNEU POUR ROUES DE VÉHICULE

(30) Priority: 01.08.2017 IT 201700088436
(43) Date of publication of application: 10.06.2020
(73) Proprietor: Pirelli Tyre S.p.A., 20126 Milano (IT)
(72) Inventor: VANZETTI, Emanuele, I-20126 Milano (IT); ROWE, Stephen, I-20126 Milano (IT)
(74) Representative: Porta & Consulenti Associati S.p.A.
(86) International application number: PCT/IB2018/055762
(87) International publication number: WO 2019/025987

(56) References cited:
- EP-A1- 2 163 404
- JP-A- 2006 027 568
- JP-A- 2006 192 955
- JP-A- 2017 094 765
- US-A- 4 416 316
- anonymus: "photo", art44.photozou , 9 January 2011 (2011-01-09), XP002780140, art44.photozou.jp Retrieved from the Internet: URL:http://art44.photozou.jp/pub/395/26139 5/photo/63705625.jpg [retrieved on 2018-04-16] & michelin motorsport: "Best of Rally Live - WRC Sweden 2011 - Studded Tyres", best-of-rally.com , 1 February 2011 (2011-02-01), Retrieved from the Internet: URL:https://www.youtube.com/watch?v=nVUfh0 4CCWY [retrieved on 2018-04-16] & Michelin Motorsport: "Studded tyres explained by Andreas Mikkelsen - 2017 WRC Rally Sweden - Michelin Motorsport", , 10 February 2017 (2017-02-10), Retrieved from the Internet: URL:https://www.youtube.com/watch?v=TI_QUI h-z9M [retrieved on 2018-04-17]

## Description

The present invention relates to a tyre for vehicle wheels.

The tyre of the invention is preferably a sports tyre intended to be used on soft and/or low-grip road surfaces, in particular on snow or ice-covered road surfaces or with the presence of soil or mud.

The tyre of the invention can however be used on compact and/or high-grip road surfaces, like for example asphalt.

The term "sports tyres" refers to tyres intended to ensure high performance in sports driving, like for example racing tyres for rally races.

The "width" of the tyre is measured along a direction parallel to the rotation axis of the tyre.

The term "equatorial plane" of the tyre is used to indicate a plane perpendicular to the rotation axis of the tyre and that divides the tyre into two parts of equal width.

The term "circumferential direction" or "circumferentially" is used making reference to a direction parallel to the rolling direction of the tyre (i.e. a direction parallel to the equatorial plane of the tyre).

The term "axial direction" or "axially" is used making reference to a direction parallel to the rotation axis of the tyre (i.e. a direction perpendicular to the equatorial plane of the tyre).

The term "footprint of the tyre" is used to indicate the development in plan of the portion of tread band that at each moment is in contact with the road surface during the rolling of the tyre.

Tyres for vehicle wheels have a tread band provided with a plurality of blocks separated from one another in the axial and circumferential directions by respective circumferential and transversal grooves. The shape, size, arrangement and number of blocks are therefore defined by the shape, size, arrangement and number of the aforementioned circumferential and transversal grooves.

The combination of blocks, circumferential grooves and transversal grooves defines the tread pattern.

It is known that the ability of a tyre to grip on the road surface during travel in a straight line and while cornering by adequately counteracting the stresses to which it is subjected to during the various travel conditions is influenced by the particular tread pattern adopted on that tyre.

It is for example known that circumferential grooves influence the behaviour of the tyre in terms of directionality and lateral stability, whereas transversal grooves influence the behaviour of the tyre in terms of traction and braking. The circumferential and transversal grooves also influence the draining of water from the footprint of the tyre during travel in a straight line and while cornering on a wet road surface, reducing the phenomena of aquaplaning.

It is also known to provide different tread patterns depending on the type of road surface on which the tyre is intended to be used.

### PRIOR ART

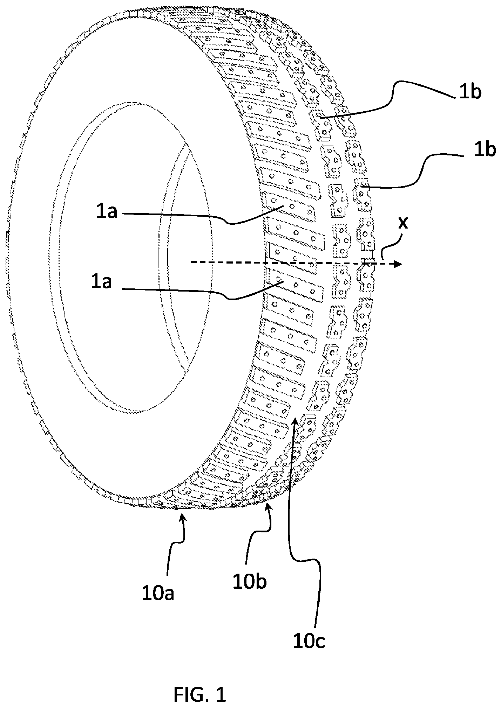

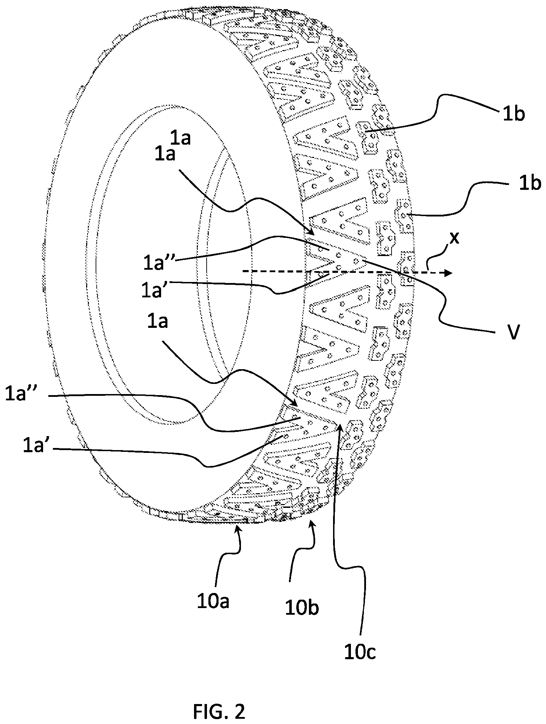

Figures 1 and 2 herewith attached schematically illustrate two known tread patterns (indicated as "PRIOR ART") of studded tyres intended to be used on icy roads. In both tread patterns two distinct annular shoulder portions 10a, 10b are provided, that are structurally and functionally separated from one another by a central annular groove 10c arranged astride of the equatorial plane of the tyre.

In the tyre of figure 1, a first annular shoulder portion 10a comprises a circumferential row of blocks 1a parallel and inclined with respect to the axial direction x by an angle greater than about 30°, in particular equal to about 40°.

The other annular shoulder portion 10b, on the other hand, comprises two circumferential rows of blocks 1b that extend in the circumferential direction, wherein the blocks 1b of one of the aforementioned two circumferential rows of blocks 1b are arranged axially offset with respect to the blocks 1b of the other of the aforementioned two circumferential rows of blocks 1b. For the sake of simplicity of illustration, in figure 1 the reference numerals 1a and 1b are associated with only some of the blocks illustrated.

In the tyre of figure 2, a first annular shoulder portion 10a comprises a circumferential row of blocks 1a each of which comprises two arms 1a', 1a" inclined on opposite sides with respect to the axial direction x by an angle greater than about 30°.

The arms 1a', 1a" join in a vertex V to define a V-shaped block.

The other annular shoulder portion 10b comprises, also in this case, two circumferential rows of blocks 1b that extend in the circumferential direction, wherein the blocks 1b of one of the aforementioned two circumferential rows of blocks 1b are arranged axially offset with respect to the blocks 1b of the other of the aforementioned two circumferential rows of blocks 1b. For the sake of simplicity of illustration, also in figure 2 the reference numerals 1a and 1b are associated with only some of the blocks illustrated.

The tyre of figure 1 is shown in the photo which can be retrieved from Internet at the following URLs:
http://art44.photozou.jp/pub/395/261395/photo/63705625.jpg.

The tyre of figure 1 is also shown in two videos which can be retrieved from Internet at the following URLS:
https://www.youtube.com/watch?v=nVUfh04CCWY;
https://www.youtube.com/watch?v=TI_QUIh-z9M.

Studded tyres intended to be used on icy roads are also described in JP 2006 027568 A and JP 2006 192955 A.

EP 2 163 404 A1 describes a tyre having shoulder tread regions configured for off-road performance separated by and interlocking with a center tread region configured for on-road performance.

JP 2017 094765 A describes a tyre in which a sub-groove extending in a tyre circumferential direction is provided on a shoulder land portion protruding to the outside of the tyre profile. The shoulder land portion is divided into an inner portion inside the sub-groove in the tyre width direction and an outer portion outside the sub-groove in the same direction.

US 4 416 316 A describes a vehicle's spare tire having a tread pattern which repeats with a relatively long pitch around the upper half of the tread circumference and with a relatively short pitch around the lower half of the tread circumference, the length of the longer pitch being twice the length of the shorter pitch. The tread pattern comprises a central row of tread blocks having central recesses and two lateral rows of skewed "U"-shaped tread blocks open towards the equatorial plane of the tire.

### SUMMARY OF THE INVENTION

Hereinafter, when values of angles are given they have to be considered as absolute values measured with respect to a direction (axial or circumferential) or a reference axis or plane.

The term "compound" is used to refer to a composition comprising at least one elastomeric polymer and at least one reinforcing filler. Preferably, such a composition also comprises additives like, for example, a cross-linking agent and/or a plasticiser. Thanks to the provision of the cross-linking agent, such a composition can be cross-linked by heating, so as to form the manufactured product that defines the tread band.

The term "substantially circumferential direction" is used to indicate a direction parallel to the rolling direction of the tyre or inclined with respect to such a rolling direction by an angle lower than or equal to about 20°, more preferably lower than or equal to about 15°, even more preferably lower than or equal to about 10°.

The term "substantially axial direction" is used to indicate a direction parallel to the rotation axis of the tyre or inclined with respect to such a rotation axis by an angle lower than or equal to about 20°, more preferably lower than or equal to about 15°, even more preferably lower than or equal to about 10°.

The term "axially more inner" is used to indicate a position axially closer to the vehicle on which the tyre will be mounted.

The term "axially more outer" is used to indicate a position axially farther from the vehicle on which the tyre will be mounted.

The term "circumferential plane" is used to indicate a plane parallel to the equatorial plane.

The term "radial" or "radially" is used making reference to a direction substantially perpendicular to the rotation axis of the tyre.

The "depth" of the tread band is measured along a direction perpendicular to the rotation axis of the tyre, thus along a radial direction.

The term "block" is used to indicate a portion projecting from the bottom of the tread band, defined between grooves as defined below and possibly comprising surface recesses and/or narrow channels as defined below. Due to the low width in the circumferential and/or axial direction, the possible presence of a narrow channel (as defined below) provided at a block, although physically separating such a block into two distinct blocks, is such that the assembly defined by the aforementioned two blocks behaves substantially like a single block in terms of rigidity along the main direction of extension of the block itself, as defined below.

Similarly, due to its reduced depth the possible presence of a surface recess (as defined below) provided at a block is such that the assembly defined by the aforementioned two blocks behaves substantially like a single block in terms of rigidity along the main direction of extension of the block itself, as defined below.

The term "groove" is used to indicate a channel defined on the tread band between two adjacent blocks and having a depth substantially equal to that of the aforementioned blocks and a circumferential width greater than about 3 mm, preferably greater than about 5 mm, even more preferably greater than about 10 mm. The groove has a depth greater than about 3 mm, more preferably greater than or equal to about 5 mm, even more preferably greater than or equal to about 10 mm.

The term "circumferential groove" is used to indicate a groove extending along a substantially circumferential direction as defined above. The circumferential groove can be defined by a straight line or by a broken line (possibly with portions radiused to one another) comprising many portions that are inclined with respect to one another and possibly of different length, wherein each of said portions is inclined with respect to the rolling direction of the tyre by an angle lower than or equal to about 20°, more preferably lower than or equal to about 15°, even more preferably lower than or equal to about 10°.

The term "transversal groove" is used to indicate a groove extending along a substantially axial direction as defined above. The transversal groove can be defined by a straight line or by a broken line (possibly with portions radiused to one another) comprising many portions that are mutually inclined and possibly of different length, wherein each of said portions is inclined with respect to the axial direction by an angle lower than or equal to about 20°, more preferably lower than or equal to about 15°, even more preferably lower than or equal to about 10°.

The term "surface recess" is used to indicate a channel defined on a block and having deep lower than that of a groove. The surface recess has therefore a deep lower than that of the block on which it is defined and does not completely separate the two block portions arranged on opposite sides with respect to the surface recess, which thus remain connected to one another under the surface recess to form a single block. The ratio between the depth of the surface recess and the depth of the groove is comprised between about 0.1 and about 0.9, preferably between about 0.2 and about 0.8.

The term "narrow recess" is used to indicate a recess defined on a block and having a depth substantially equal to that of the grooves that define the block and a circumferential width lower than about 3 mm.

The term "module" is used to indicate a portion of tread band comprising at least one block and preferably having an axial width substantially equal to the axial width of the tread band. The module repeats substantially identically for a predetermined number of times along the circumferential direction, depending on the outer diameter of the tyre, to define the entire tread band.

The terms "entry into the footprint" and "exit from the footprint" are used to indicate - with reference to the blocks of the tread band - the blocks/block portions that are stressed first or make contact first with the road surface during the rolling of the tyre and the blocks/block portions that are stressed last or that are last to leave the contact with the road surface, respectively.

The term "rubber to void ratio" is used to indicate the ratio between the total of the top surfaces of the blocks of a predetermined portion of the tread band (possibly of the entire tread band) and the total surface of said predetermined portion of tread band (possibly of the entire tread band).

When reference is made hereinafter through the term "mainly" to an extension along a direction, it is meant that the extension, measured in the footprint of the tyre, along that particular direction is greater than that in any other direction in the same footprint, preferably equal to at least twice the one in the aforementioned other direction. Therefore, for example, a block portion extending mainly along a substantially axial direction is a block portion that has an extension along a substantially axial direction greater than (preferably equal to at least twice) the one along a circumferential direction. Consistently, a block portion extending mainly along a substantially circumferential direction is a block portion that has an extension along a substantially circumferential direction greater than (preferably equal to at least twice) the one along an axial direction.

When reference is made hereinafter to studs and it is stated that they are arranged "offset in the axial direction" or "offset in the circumferential direction" it is meant that the projection of the longitudinal axes of the studs on the equatorial plane of the tyre or on a plane perpendicular to the equatorial plane of the tyre, respectively, defines on the aforementioned planes a number of distinct points equal to the number of studs.

When reference is made to the position of a stud on a block, the position of the longitudinal axis of the stud is being referred to.

The Applicant believes that, the width of the tyre being equal, in order to ensure optimal traction on soft and/or low-grip road surfaces, like, for example, snow or ice-covered road surfaces and/or with the presence of soil or mud, it is advisable to provide the the axially more inner annular shoulder portion of the tread band with blocks or block portions extending mainly along a substantially circumferential direction, so as to effectively transmit the torque between tyre and road surface, and the axially more outer annular shoulder portion of the tread band with blocks or block portions extending mainly along a substantially axial direction, so as to allow the front faces of the blocks to sink into the soft surface of the road surface, avoiding skidding of the tyre.

Differently, in order to ensure optimal traction on compact and/or high-grip road surfaces, like for example asphalt, the Applicant believes that it is advisable to provide the axially more inner portion of the tread band with blocks or block portions extending mainly along a substantially axial direction, so as to obtain, during travel in a straight line, a high vertical yielding in the part of the tyre that is subject to camber, and the axially more outer portion of the tread band with blocks or block portions extending mainly along a substantially circumferential direction, so as to maximise, during cornering, the transmission of torque between tyre and road surface in the part of the tyre that is most stressed due to the lateral acceleration which the tyre is subjected to.

The Applicant observed that, in the case of low-width tyres (for example tyres whose width is lower than 145 mm), the changes in behaviour between axially more inner portion and axially more outer portion of the tread band in response to the stress which the aforementioned portions of tread band are subjected to during the various travel conditions can be considered sufficiently limited, to the point that the technical effects discussed above can also be achieved by providing a plurality of modules each comprising a single block having:
- an axially more inner portion extending mainly along a substantially circumferential direction, in the case of tyres intended to be used on soft and/or low-grip road surfaces, or along a substantially axial direction, in the case of tyres intended to be used on compact and/or high-grip road surfaces;
- the remaining block portion extending mainly along a substantially axial direction, in the case of tyres intended to be used on soft and/or low-grip road surfaces, or along a substantially circumferential direction, in the case of tyres intended to be used on compact and/or high-grip road surfaces.

According to the Applicant, in tyres of low width the same technical effects discussed above can be achieved by providing a plurality of modules each comprising:
- in the axially more inner annular shoulder portion of the tread band, blocks/block portions extending mainly along a substantially circumferential direction, in the case of tyres intended to be used on soft and/or low-grip road surfaces, or along a substantially axial direction, in the case of tyres intended to be used on compact and/or high-grip road surfaces;
- in the axially more outer annular shoulder portion of the tread band, blocks/block portions extending mainly along a substantially axial direction, in the case of tyres intended to be used on soft and/or low-grip road surfaces, or along a substantially circumferential direction, in the case of tyres intended to be used on compact and/or high-grip road surfaces.

The Applicant has, on the other hand, observed that, in the case of tyres of greater width than those identified above (for example tyres whose width is greater than 145 mm), the changes in behaviour between axially more inner portion and axially more outer portion of the tread band in response to the stresses which the aforementioned portions of tread band are subjected to during the various travel conditions become significant and it is therefore preferable to provide the two annular shoulder portions of the tread band with blocks of different type and to orient such blocks in a suitable manner (i.e. so that they extend mainly along a substantially axial direction or along a substantially circumferential direction) depending on the type of road surface on which the tyres are intended to be used, consistently with what has been described above.

The Applicant focused its attention on tyres (for example those having a width greater than 145 mm) intended to be used on soft and/or low-grip road surfaces, like for example snow or ice-covered road surfaces and/or with the presence of soil or mud, and wherein the changes in behaviour between axially more inner portion and axially more outer portion of the tread band in response to the stresses which the aforementioned portions of tread band are subjected to during the various travel conditions are deemed significant.

The Applicant noted that the known tyres of figures 1 and 2, having blocks oriented substantially in the circumferential direction in the annular shoulder portion 1b and blocks oriented transversally in the annular shoulder portion 1a, are suitable for being used on soft and/or low-grip road surfaces.

The Applicant however noted that in the tyre of figure 1, the blocks 1a all have the same inclination with respect to the axial direction and such an inclination is not negligible. According to the Applicant, the inclination of the blocks 1a is such as to generate an excessive lateral thrust on the tyre, and thus on the vehicle. In order to balance this lateral thrust it is thus necessary to mount, on the side of the vehicle opposite to that on which the tyre of figure 1 is mounted, a tyre which is symmetrical to the latter, the manufacturing of which requires a mould different from the one required to manufacture the tyre of figure 1. This results in an undesired increase in the production and management costs.

The Applicant has noted that also the tyre of figure 2 has blocks 1a that, due to their non-negligible inclination with respect to the axial direction, generate an excessive lateral thrust on the vehicle. However, in this case, since the arms 1a', 1a" of the blocks 1a have opposite inclinations with respect to the axial direction, the aforementioned lateral thrusts balance themselves out in the tyre itself. The tyre of figure 2 therefore has a substantially identical behaviour during rolling in the two directions of rotation and it is thus possible to manufacture with a single mould both tyres intended to be mounted on the same axis of the vehicle.

The Applicant felt the need to identify a tyre capable of ensuring optimal traction on soft and/or low-grip road surfaces and that, like that of figure 2, has a substantially identical behaviour in the two directions of rotation, so as to allow manufacturing with a single mould of both the tyres which are intended to be mounted on the same axis of the vehicle.

The Applicant thought that, in order to satisfy such a requirement, it is at first advisable to provide the axially more inner annular shoulder portion (hereinafter also indicated as "first annular shoulder portion") of the tread band of the aforementioned tyre with blocks or block portions extending mainly along a substantially circumferential direction (hereinafter such blocks/block portions are also identified more simply with the term "substantially circumferential blocks/block portions"), so as to maximise the transmission of torque between tyre and road surface, and the axially more outer annular shoulder portion (hereinafter also indicated as "second annular shoulder portion") of the tread band with blocks or block portions extending mainly along a substantially axial direction (hereinafter such blocks/block portions are also identified more simply with the term "substantially axial blocks/block portions"), so as to create edges in the substantially axial blocks/block portions which are configured to allow such blocks/block portions to sink into the soft ground when they are entering into the footprint and until they exit the footprint.

The Applicant perceived that in order to achieve an effective interpenetration between substantially axial blocks/block portions and ground it is advisable that the substantially axial blocks/block portions tare separated from one another by transversal grooves having a circumferential width such as to define a sufficiently wide space between two circumferentially consecutive substantially axial blocks/block portions to accommodate a correspondingly wide portion of ground. The Applicant believes that this occurs when the circumferential width of the aforementioned transversal groove is equal to at least half of the circumferential width of the axial blocks/block portions.

The Applicant also perceived that a tread pattern of the type described above would also make it possible to minimise the lateral thrusts generated by the substantially axial blocks/block portions, giving the tyre a substantially identical performance in the two directions of rotation. It would therefore be possible to manufacture both tyres intended to be mounted on the same axis of the vehicle with a single mould.

The Applicant thus found that a tyre provided, in the axially more inner annular shoulder portion of the tread band, with substantially circumferential blocks and, in the axially more outer annular shoulder portion of the tread band, with substantially axial blocks/block portions separated by transversal grooves having a circumferential width equal to at least half the circumferential width of the substantially axial blocks/block portions, makes it possible to achieve optimal traction on soft and/or low-grip road surfaces and can be mounted on both sides of the same axis of the vehicle.

The present invention therefore relates to a tyre for vehicle wheels, in particular for sports vehicle wheels intended to be used on soft and/or low-grip road surfaces, for example in rally races in northern European countries. The tyre of the invention has the features recited in claim 1.

According to the Applicant, the provision of substantially circumferential blocks/block portions and of substantially axial block portions in the axially more inner annular shoulder portion and in the axially more outer annular shoulder portion of the tyre of the invention, respectively, together with the provision of a transversal groove between two circumferentially consecutive substantially axial block portions, provides the tyre of the invention with optimal traction on soft and/or low-grip road surfaces, without at the same time generating significant lateral thrusts that would need to be balanced, on the opposite side of the vehicle which the tyre of the invention is mounted on, by a tyre symmetrical to that of the invention and manufactured with a different mould from the one used to manufacture the tyre of the invention. The tyre of the invention therefore fully meets the aforementioned needs felt by the Applicant.

The Applicant also deemed that the provision of substantially axial block portions on the axially more outer annular shoulder portion of the tyre makes it possible to provide such block portions with a high axial rigidity, or in other words with a high ability to withstand the lateral stresses developed by the vehicle during cornering.

Preferably, the ratio between the circumferential width of said transversal groove and the circumferential width of said at least one block portion of said pair of second block portions is greater than, or equal to, about 0.6, more preferably greater than, or equal to, about 0.7, even more preferably greater than, or equal to, about 0.8, even more preferably greater than, or equal to, about 0.9.

Preferably, the ratio between the circumferential width of said transversal groove and the circumferential width of said at least one block portion of said pair of second block portions is lower than, or equal to, about 1.5, more preferably lower than, or equal to, about 1.4, more preferably lower than, or equal to, about 1.3, even more preferably lower than, or equal to, about 1.2, even more preferably lower than, or equal to, about 1.1.

Preferably, the ratio between the circumferential width of said transversal groove and the circumferential width of said at least one block portion of said pair of second block portions is comprised between about 0.5 and about 1.5, the extreme values being included, more preferably between about 0.6 and about 1.4, the extreme values being included, more preferably between about 0.7 and about 1.3, the extreme values being included, even more preferably between about 0.8 and about 1.2, the extreme values being included, even more preferably between about 0.9 and about 1.1, the extreme values being included.

In preferred embodiments, the circumferential width of said transversal groove is substantially equal to the circumferential width of said at least one block portion of said pair of second block portions.

Preferably, said tread band has a rubber to void ratio greater than, or equal to, about 0.4, more preferably greater than, or equal to, about 0.42, more preferably greater than, or equal to, about 0.45.

Preferably, said tread band has a rubber to void ratio lower than, or equal to, about 0.5, more preferably lower than, or equal to, about 0.48, more preferably lower than, or equal to, about 0.47.

In preferred embodiments, said tread band has a rubber to void ratio comprised between about 0.4 and about 0.5, the extreme values being included, preferably between about 0.42 and about 0.48, the extreme values being included, more preferably between about 0.45 and about 0.47, the extreme values being included, for example equal to about 0.46. The tyre of the invention thus has a rubber to void ratio greater than those of a conventional winter tyre intended to be used on snow-covered road surfaces and for this reason also provided with a plurality of sipes.

Preferably, the two block portions of said pair of second block portions have the same circumferential width measured on any circumferential plane that intersects said pair of second block portions.

However, embodiments are foreseen in which the two block portions of said pair of second block portions have different circumferential widths measured on any circumferential plane that intersects said pair of second block portions.

Preferably, the two block portions of said pair of second block portions have a constant circumferential width in the axial direction.

However, embodiments are foreseen in which one or both of the block portions of said pair of second block portions have a circumferential width that varies in the axial direction.

Preferably, the block portions of said pair of second block portions are substantially parallel to one another. They thus react in an identical way to the axial stresses which they are subjected to during cornering, without moreover generating significant lateral thrusts that have to be compensated.

However, embodiments are foreseen in which the block portions of said pair of second block portions are inclined with respect to one another, so as to progressively get closer or farther apart when moving in the axial direction away from the equatorial plane of the tyre.

Preferably, each block portion of said pair of second block portions is inclined with respect to an axial direction by an angle lower than about 20°. Such a provision allows a gradual entry of the block/block portion into the footprint of the tyre, in such a way avoiding sudden changes in the torque transmitted and, at the same time, decreasing the average stress state which the block is subjected to during rolling. Consequently, the degradation of the block due to rolling and, consequently, the degradation of the performance of the tyre is reduced. The aforementioned inclination also produces a reduction of the noise of the tyre during rolling.

More preferably, each block portion of said pair of second block portions comprises a first portion inclined with respect to said axial direction and a second axially more inner portion with respect to said first portion and inclined with respect to said axial direction on the same side as said first portion. In this way possible residual lateral thrusts on the block are at least partially balanced locally on the block itself.

Preferably, the aforementioned first portion is inclined with respect to said axial direction by an angle lower than or equal to about 20°, more preferably lower than or equal to about 15°, even more preferably lower than or equal to about 10°, for example equal to about 10°.

Preferably, the aforementioned second portion is inclined with respect to said axial direction by an angle lower than or equal to about 20°, more preferably lower than or equal to about 15°, even more preferably lower than or equal to about 10°, for example equal to about 10°.

In preferred embodiments, the angle of inclination of the aforementioned first portion is equal to the angle of inclination of the aforementioned second portion.

Alternative embodiments are foreseen in which the aforementioned first portion is inclined on the opposite way to the aforementioned second portion with respect to said axial direction.

Preferably, said tread band comprises an intermediate annular portion arranged astride of the equatorial plane and that separates said two annular shoulder portions.

Preferably, the aforementioned intermediate annular portion comprises a central circumferential groove that may or may not extend on opposite ways with respect to the equatorial plane of the tyre.

In embodiments of wide tyres (i.e. of tyres whose width is greater than about 149 mm) which are out of the invention, the tread band comprises a third block axially arranged between said first block and said pair of second blocks.

Preferably, said third block comprises a main portion extending mainly along a substantially circumferential direction.

Preferably, said third block comprises a first secondary portion extending mainly along a substantially axial direction.

Preferably, said first secondary portion is axially aligned with a first block of said pair of second blocks.

Preferably, said third block comprises a second secondary portion extending mainly along a substantially axial direction.

Preferably, said second secondary portion is axially aligned with a second block of said pair of second blocks.

In embodiments of wide tyres according to the invention, said tread band comprises a third block portion axially arranged between said first block and said pair of second block portions.

The Applicant perceived that the intermediate annular portion of the tyre is also subjected, during travel in a straight line and while cornering, to stresses similar to those which the two opposite annular shoulder portions are subjected to and in practice defines a transition zone in the tread band that influences the behaviour of the tyre. The provision of the aforementioned third block portion in the aforementioned intermediate annular portion provides the aforementioned intermediate annular portion with a rigidity which is suitable to counteract the aforementioned stresses.

In narrow tyres, said third block portion is arranged in an axially more inner position, in the position in which said first block is provided in wider tyres.

In wider tyres, preferably, said third block portion is axially adjacent to the aforementioned central circumferential groove.

In all of the embodiments described above, said third block portion comprises a main portion extending mainly along a substantially circumferential direction. Such a main portion provides the block with the ability to adequately counteract the circumferential stresses which it is subjected to during travel in a straight line.

In wider tyres, preferably, said main portion of the third block portion intersects said equatorial plane.

In all of the embodiments described above, preferably, said main portion of the third block portion comprises a first surface recess extending along a substantially axial direction.

Preferably, the depth of said first surface recess is selected so as not to compromise the overall rigidity of the block and, at the same time, at least partially decouple the surface portions of the two parts of block separated by said first surface recess, so as to provide each of them with a certain degree of mobility.

Preferably, the ratio between the depth of said first surface recess and the depth of said transversal groove is comprised between about 0.1 and about 0.3, the extreme values being included, more preferably between about 0.1 and about 0.2, the extreme values being included, for example equal to about 0.2.

Preferably, said first surface recess crosses the entire said main portion of the third block portion.

In all of the embodiments described above, preferably, said third block portion comprises a first secondary portion substantially perpendicular to said main portion. Such a secondary portion provides the block with the ability to adequately counteract the axial stresses which it is subjected to during cornering.

Preferably, said first secondary portion of the third block portion is axially aligned with a first block portion of said pair of second block portions.

Preferably, said first secondary portion of the third block portion is connected to said first block portion of said pair of second block portions, so as to define a single substantially L-shaped block (or a substantially L-shaped portion of a single block). The connection between said first secondary portion of the third block portion and said first block portion of said pair of second block portions ensures that the aforementioned first block portion and the aforementioned third block portion behave in practice like a single block capable of better withstanding the circumferential and axial stresses which the corresponding tyre portion is subjected to during travel in a straight line and while cornering. The better ability to withstand the aforementioned stresses is given by the fact that such stresses are distributed over a larger resisting area, avoiding stress peaks in particular zones of the tread band.

According to the Applicant, a L-shaped block as described above, having a substantially circumferential portion in an axially more inner position and a substantially axial portion in an axially more outer position, is suitable for effectively counteracting by itself alone the circumferential and axial stress which the tyre is subjected to at a module of the tread band, and therefore it can be used in a narrow tyre even without the need to provide further blocks in the same module.

In an alternative embodiment, said first secondary portion of the third block portion is separated from said first block of said pair of second blocks by a respective substantially circumferential groove.

Preferably, said tread band comprises a second surface recess arranged between said first secondary portion of the third block portion and said first block portion of said pair of second block portions.

Preferably, said second surface recess extends along a substantially circumferential direction.

Preferably, the depth of said second surface recess is selected so as not to compromise the overall rigidity of the block and, at the same time, at least partially decouple the surface portions of the two parts of block separated by said second surface recess, so as to provide each of them with a certain degree of mobility.

Preferably, said second surface recess has a depth greater than that of said first surface recess, so as to globally ensure a resistance that is as uniform as possible of the third block portion in all travel conditions.

Preferably, the ratio between the depth of said first surface recess and the depth of said transversal groove is comprised between about 0.3 and about 0.7, the extreme values being included, more preferably between about 0.4 and about 0.6, the extreme values being included, for example equal to about 0.5.

Preferably, said third block portion comprises a second secondary portion which is substantially perpendicular to said main portion. Such a second secondary portion assists the aforementioned first secondary portion to counteract the axial stresses which the third block portion is subjected to during cornering.

Preferably, said second secondary portion of the third block portion is parallel to said first secondary portion of the third block portion.

Preferably, said second secondary portion of the third block portion is axially aligned with a second block portion of said pair of second block portions.

Preferably, said second secondary portion of said third block portion is connected to said second block portion of said pair of second block portions. The third block portion in this case forms, together with the two block portions of the aforementioned pair of second block portions, a single substantially U-shaped block, such a block having two axial arms (defined by the aforementioned block portions of the pair of second block portions and by the aforementioned first and second secondary portions of the third block portion) suitable for providing the U-shaped block with an axial rigidity and the base of the U (defined by the aforementioned main portion of the third block portion) suitable for providing the U-shaped block with a circumferential rigidity. Such a single U-shaped block is capable of withstanding in an optimal manner both the circumferential and the axial stresses which the corresponding portion of tyre is subjected to during travel in a straight line and while cornering. This is thanks to the fact that such stresses are distributed over a very large resistant area, avoiding stress peaks in particular zones of the tread band.

According to the Applicant, a U-shaped block as described above, having a substantially circumferential portion in an axially more inner position and a pair of substantially axial portions in an axially more outer position, is suitable by itself for counteracting the circumferential and axial stresses which the tyre is subjected to at a module of the tread band, and therefore it can be used in a narrow tyre even without the need to provide further blocks in the same module. The same technical effects are obtained if one of the two substantially axial portions is provided with a substantially circumferential groove that in fact separates said two substantially axial portions into two different block portions.

Preferably, said tread band comprises a third surface recess arranged between said second secondary portion of the third block portion and said second block portion of said pair of second block portions.

The aforementioned third surface recess performs analogous functions to those described above with reference to the aforementioned second surface recess.

Preferably, said third surface recess extends along a substantially circumferential direction.

Preferably, said third surface recess has a depth greater than that of said first surface recess.

Preferably, said third surface recess has a depth substantially equal to that of said second surface recess.

In alternative embodiments, said third surface recess has a depth greater than that of the first surface recess and lower than that of said second surface recess.

In further alternative embodiments, said third surface recess has a greater depth than that of the first surface recess and greater than that of said second surface recess.

In further alternative embodiments, said second and third surface recesses have a depth smaller than that of the first surface recess.

Preferably, said main portion of said third block portion is inclined with respect to a circumferential direction. Such a provision allows a gradual entry of the block into the footprint of the tyre, in this way avoiding sudden changes in the torque transmitted and, at the same time, decreasing the average stress state which the block is subjected to during rolling. Consequently, the degradation of the block due to rolling and, consequently, the degree of performance of the tyre is reduced. The aforementioned inclination also contributes to reducing the noise of the tyre during rolling.

Preferably, said main portion of the third block portion comprises a first part inclined with respect to said circumferential direction and a second part circumferentially adjacent to said first part and inclined with respect to said circumferential direction on the same side as said first part. In this way, possible residual axial thrusts on the third block portion are at least partially balanced locally on the third block portion itself.

Preferably, the aforementioned first part of the main portion of the third block portion is inclined with respect to said axial direction by an angle lower than or equal to about 20°, more preferably lower than or equal to about 15°, even more preferably lower than or equal to about 10°, for example equal to about 10°.

Preferably, the aforementioned second part of the main portion of the third block portion is inclined with respect to said axial direction by an angle lower than or equal to about 20°, more preferably lower than or equal to about 15°, even more preferably lower than or equal to about 10°, for example equal to about 10°.

In preferred embodiments, the angle of inclination of the aforementioned first part of the main portion of the third block portion is equal to the angle of inclination of the aforementioned second part of the main portion of the third block portion.

Preferably, said third block portion is separated from said first block by the aforementioned central circumferential groove.

Preferably, said first circumferential groove extends circumferentially along a trajectory defined by a broken or zig-zag line.

Preferably, said first block extends circumferentially along a trajectory defined by a broken or zig-zag line. This is so as to locally compensate for possible axial thrusts active on the block.

Preferably, the aforementioned trajectory is defined by a zig-zag line with two changes of inclination.

Preferably, said second annular shoulder portion comprises a first circumferential row of pairs of block portions which are identical to said pair of second block portions.

Preferably, each pair of block portions of said first circumferential row is separated from the previous pair of block portions of said first circumferential row by a respective first main transversal groove.

Preferably, said first annular shoulder portion comprises a second circumferential row of blocks which are identical to said first block.

Preferably, each block of said second circumferential row is separated from a previous block of said second circumferential row by a respective second main transversal groove. The aforementioned main transversal groove opens into the aforementioned central circumferential groove.

Preferably, said first block comprises a first portion axially adjacent to said main portion of said third block portion.

Preferably, said first block comprises a second portion axially adjacent to said first main transversal groove. Such a second portion is therefore arranged offset in the axial direction with respect to the block portions of the pair of second block portions and prevents the first main transversal groove from completely crossing the first annular shoulder portion of the tread band.

Preferably, said tread band comprises a third circumferential row of block portions which are identical to said third block portion.

Preferably, each block portion of said third circumferential row is separated from a previous block portion of said third circumferential row by said first main transversal groove. The first main transversal groove therefore extends from the second annular shoulder portion until it opens into the aforementioned central circumferential groove.

Preferably, the block portions of said third circumferential row are all oriented identically, i.e. with the same inclination with respect to the axial direction and to the circumferential direction.

The tyre of the invention advantageously has a modular structure, in which the base module of an embodiment of the tyre of the invention is defined by the aforementioned first block, third block portion and pair of second block portions.

Such a base module can be axially widened in the case in which a tyre of greater width is provided.

In this case, preferably, said first annular shoulder portion comprises at least one fourth block extending mainly along a substantially circumferential direction.

Preferably, said at least one fourth block is axially adjacent to said first block.

Preferably, said at least one fourth block is separated from said first block by a second circumferential groove.

Preferably, said second circumferential groove extends circumferentially along a trajectory defined by a broken or zig-zag line.

Preferably, said at least one fourth block is identical to said at least one first block.

Preferably, said first annular shoulder portion comprises a fourth circumferential row of blocks which are identical to said at least one fourth block.

Preferably, each block of said fourth circumferential row is separated from an adjacent block of said fourth circumferential row by a respective third main transversal groove.

Preferably, said third main transversal groove is an elongation of the aforementioned second main transversal groove. In other words, the second main transversal groove crosses the entire first annular shoulder portion of the tread band.

Preferably, the tyre of the invention is a studded tyre, i.e. it comprises a plurality of studs distributed over the various blocks, so as to ensure traction on specific soft and/or low-grip surfaces on which in the absence of the studs the tyre discussed above could skid.

Preferably, the position of the studs on the tread band and on the single blocks of each module of the tread band is selected so as to obtain a density that is as uniform as possible over the entire footprint, both in the axial direction and in the circumferential direction, so that each stud can grip onto a respective portion of road surface (with clear advantages in terms of efficiency and uniformity of traction) and so that the traction stress which a single stud is subjected to can be distributed evenly over a volume of compound that is as wide as possible (with consequent reduction of the risk of losing studs upon yielding of the block portion which they are associated with).

Preferably, said first block comprises at least two circumferentially consecutive studs which are arranged offset in the circumferential direction, so as to be positioned on a part of the first annular shoulder portion that is as wide as possible in the axial direction. Such a provision contributes to distributing in the axial direction the circumferential stresses which the studs provided on the axially more inner annular shoulder portion of the tread band are subjected to, with consequent reduction of the risk of loss of such studs.

Preferably, a stud of said at least two studs of said first block is arranged on said second portion of said first block, i.e. in a position axially adjacent to the first main transversal groove. This contributes to obtaining the desired uniformity of traction, thanks to the fact that such a stud will grip on the ground precisely when the studs provided on the axially more outer portion of the tread band will not grip.

Preferably, each block portion of said pair of second block portions comprises at least two axially consecutive studs which are arranged offset in the axial direction, so as to engage a portion of tread band that is as wide as possible in the circumferential direction. In this way, the axial stresses which the studs provided on the axially more outer annular shoulder portion of the tread band are subjected to are distributed in the circumferential direction, with consequent advantages in terms of uniformity of traction and reduction of the risk of losing such studs.

Preferably, all of the studs of said first block are arranged offset in the axial direction with respect to all of the studs of the block portions of said pair of second block portions. Such a provision contributes to achieving the desired uniformity of density of studs in the axial and circumferential direction on a sufficiently large portion of the footprint, with consequent advantages in terms of uniformity of traction and reduction of the risk of losing such studs.

Preferably, said main portion of said third block portion comprises at least two circumferentially consecutive studs which are arranged offset in the circumferential direction, so as to be positioned on a portion of tread band that is as large as possible in the axial direction. In this way, the stresses which the studs provided in the intermediate annular portion of the tread band are subjected to are distributed uniformly in the axial direction, with consequent reduction of the risk of losing such studs.

Preferably, said at least two studs of said main portion of said third block portion are arranged on opposite sides with respect to said first surface recess. The provision of the aforementioned first surface recess, whilst leaving each of the aforementioned two studs the possibility of moving freely with respect to the other stud, allows the stresses which each of the two studs are subjected to to also be distributed over the block portion arranged on the other side of the first surface recess, reducing the risk of losing the studs.

Preferably, said first secondary portion of said third block portion comprises at least one stud. This contributes to achieving the desired uniformity of density of studs in the axial direction in the intermediate annular portion of the tread band and makes it possible to partially relieve both the studs provided on the main portion of the third block portion and, in the case in which the aforementioned second surface recess is provided, the studs provided on the adjacent block of the pair of second block portions, from the stresses which such studs are subjected to, with a consequent reduction of the risk of losing the aforementioned studs.

Preferably, all of the studs of said third block portion are arranged offset from one another in the axial direction and in the circumferential direction. In this way, the desired uniformity of density of studs in the axial and circumferential direction is achieved over a sufficiently large portion of the intermediate annular portion of the tread band, with consequent advantages in terms of uniformity of traction and reduction of the risk of losing such studs.

Preferably, all of the studs of said third block portion are arranged offset in the axial direction with respect to the studs of the block portions of said pair of second block portions, so as to achieve the desired graduality of traction and to be able to distribute the stresses which such studs are subjected to over a sufficiently large portion of the footprint, with consequent reduction of the risk of losing such studs.

Preferably, said at least one fourth block comprises at least two circumferentially consecutive studs which are arranged offset in the circumferential direction, so as to be positioned on a portion of tread band that is as large as possible in the axial direction. Such a provision contributes to distributing in the axial direction the circumferential stresses which the studs provided on the axially more inner annular shoulder portion of the tread band are subjected to, with consequent reduction of the risk of losing such studs.

Preferably, said at least two studs of said at least one fourth block are arranged offset in the axial direction with respect to said at least two studs of said first block. Such a provision contributes to achieving the desired uniformity of traction and makes it possible to distribute in the circumferential direction the axial stresses which the studs provided on the axially more inner annular shoulder portion of the tread band are subjected to, with consequent reduction of the risk of losing such studs.

Preferably, said at least two studs of said at least one fourth block are arranged offset in the axial direction with respect to all of the studs of the block portions of said pair of second block portions, so as to achieve the desired graduality of traction and be able to distribute the stresses which such studs are subjected to over a sufficiently large portion of the footprint, with consequent reduction of the risk of losing such studs.

Preferably, said at least two studs of said at least one fourth block are arranged offset in the axial direction with respect to all of the studs of said third block portion. Such a provision contributes to achieving the desired graduality of traction and makes it possible to distribute the stresses which such studs are subjected to over a sufficiently large portion of the footprint, with consequent reduction of the risk of losing such studs.

The Applicant has perceived that in the case in which the tyre is intended to be used on compact and/or high-grip road surfaces, like for example asphalt, the aforementioned first annular shoulder portion comprises a first block extending mainly along a substantially axial direction and the aforementioned second annular shoulder portion comprises a pair of second block portions arranged in the same module of said first block and extending mainly along a substantially circumferential direction. In practice, the positions of the aforementioned first blocks and second block portions in the aforementioned first and second annular shoulder portions are exchanged with respect to the case described above in which the tyre is intended to be used on soft and/or low-grip road surfaces.

Also in this case, the circumferential and transversal grooves and the surface recesses described above are provided.

The first blocks, second block portions and third block portions (and possibly also the fourth blocks, if provided), as well as the circumferential and transversal grooves of the tyre and the surface recesses provided in the blocks/block portions have the same shape and the same structural characteristics discussed above, with the exception that the third block portion can be arranged either in an axially more inner position with respect to the pair of second block portions (like in the tyre intended to be used on soft and/or low-grip road surfaces) or in an axially more outer position with respect to the pair of second block portions.

It is also possible to provide an alternate sequence, in the circumferential direction, of block portions wherein a third block portion is axially more outer with respect to said pair of second block portions and the circumferentially consecutive third block portion is axially more outer with respect to said pair of second block portions in a circumferentially adjacent module and so on.

The Applicant has also perceived that in the case in which the tyre has a low width, for example a width lower than about 145 mm, and is intended to be used on soft and/or low-grip road surfaces, in order to achieve all of the technical effects described above it is advisable to provide the axially more inner portion of the tread band with block portions extending mainly along a substantially circumferential direction (hereinafter also indicated as "substantially circumferential block portions") and the remaining axial portion of the tread band with block portions extending mainly along a substantially axial direction (hereinafter also indicated as "substantially axial block portions").

Vice-versa, in the case in which the tyre has a low width, for example a width lower than about 145 mm, and is intended to be used on compact and/or high-grip road surfaces, it is advisable to provide the axially more outer portion of the tread band with substantially circumferential block portions in the remaining axial portion of the tread band with substantially axial block portions.

According to the Applicant, the aforementioned substantially axial block portions can have the same shape and the same structural characteristics as the aforementioned second block portions and as the aforementioned secondary portions of the third block portions, whereas the aforementioned substantially circumferential block portions can have the same shape and the same structural characteristics as the aforementioned main portions of the third block portions.

In practice, according to the Applicant, in a low-width tyre it is not necessary to use blocks identical to the aforementioned first (and fourth) blocks and it is possible to use only the aforementioned second and third block portions, or a single block comprising the aforementioned second block portions and the aforementioned third block portion.

In this case it is preferably to provide a substantially circumferential groove that separates at least one of the two secondary portions of said third block portion from the axially adjacent axial block portions. In other words, it is preferable for at least one of the aforementioned second and third surface recesses to be replaced by a respective substantially circumferential groove.

It is also possible to provide for an alternate sequence, in the circumferential direction, of block portions in which a third block portion is axially more outer with respect to said pair of second block portions and the circumferentially consecutive third block portion is axially more outer with respect to said pair of second block portion in a circumferentially adjacent module and so on.

Further characteristics and advantages of the present invention will become clearer from the following detailed description of preferred embodiments thereof, made with reference to the attached drawings.

In such drawings:
- figure 1 is a schematic perspective view of a known tyre;
- figure 2 is a schematic perspective view of another known tyre;
- figure 3 is a schematic front view of a tyre in accordance with a preferred embodiment of the present invention;
- figure 4 is a schematic view of the development in plan of a portion of the tyre of figure 4;
- figure 5 is a schematic front view of an alternative embodiment of a tyre according to the present invention.

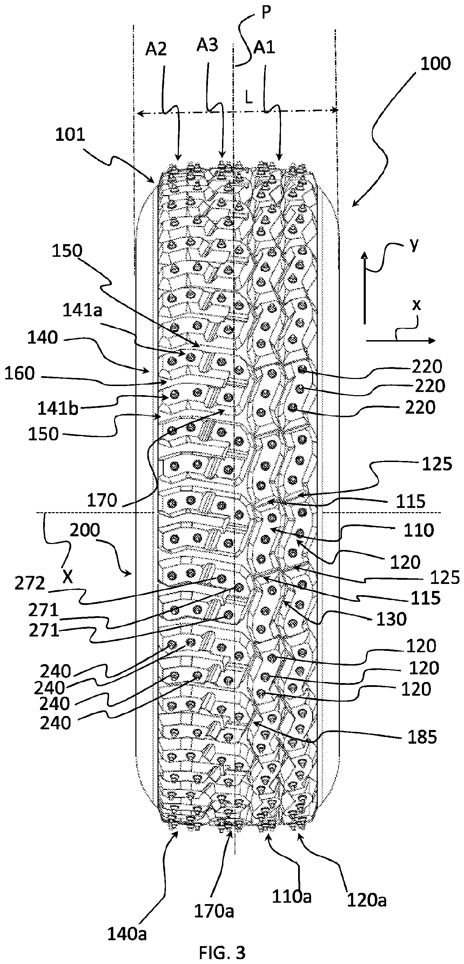

In figure 3, reference numeral 100 indicates a preferred embodiment of a tyre in accordance with the present invention.

The tyre 100 is, preferably, a sports tyre intended to be used in rally races (in particular in rally races in northern European countries) on soft and/or low-grip road surfaces, in particular on snow or ice-covered road surfaces and/or with the presence of soil or mud.

Preferably, the tyre 100 has a total width L not lower than 145 mm, more preferably not lower than 165 mm, even more preferably not lower than 175 mm, for example equal to 185 mm.

The tyre 100 comprises a rotation axis X, an equatorial plane P and a tread band 101 arranged astride of the equatorial plane P.

The tread band 101 comprises an axially inner first annular shoulder portion A1 arranged on one side of the equatorial plane P, an axially outer second annular shoulder portion A2 arranged on the opposite side to the first annular shoulder portion A1 with respect to the equatorial plane P and an intermediate annular portion A3 axially arranged between the annular shoulder portion A1 and arranged astride of the equatorial plane P.

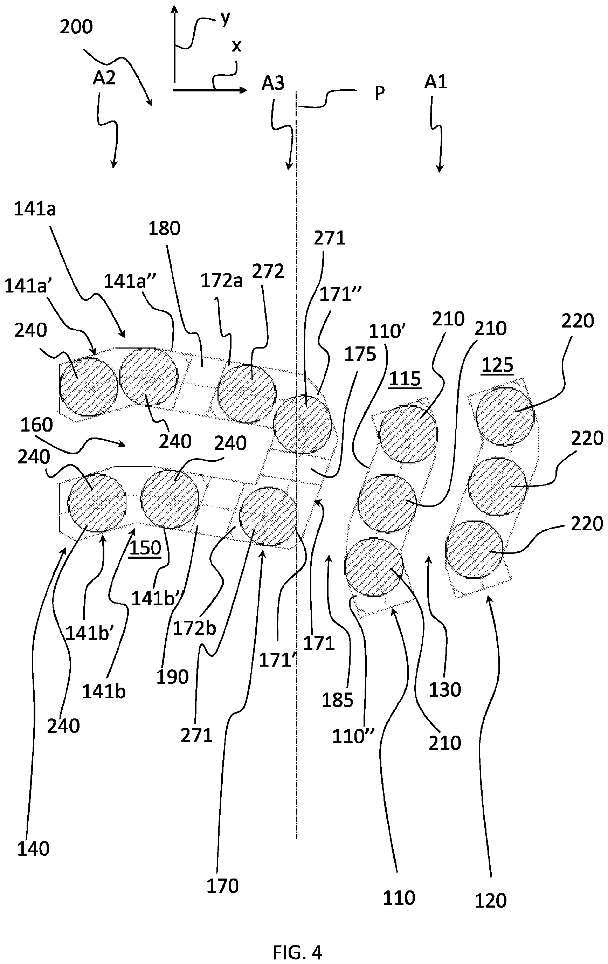

The first annular shoulder portion A1 of the tread band 101 comprises a plurality of first blocks 110 circumferentially aligned to form a respective circumferential row 110a (the circumferential direction is indicated with y in figures 3 and 4).

For the sake of simplicity of illustration, in figure 3 reference numeral 110 is associated with only one of the blocks of the circumferential row 110a.

The blocks 110 extend mainly along a substantially circumferential direction and are circumferentially separated from one another by a respective main transversal groove 115.

The blocks 110 are also indicated as "substantially circumferential blocks" and will be described in greater detail hereinafter.

In the specific example illustrated in figure 3, the first annular shoulder portion A1 of the tread band 101 also comprises a plurality of further blocks 120 circumferentially aligned to form a respective circumferential row 120a axially adjacent to the circumferential row 110a. The axial direction is indicated with x in figures 3 and 4.

For the sake of simplicity of illustration, in figure 3 reference numeral 120 is associated with only one of the blocks of the circumferential row 120a.

The blocks 120 are arranged in an axially more inner position with respect to the blocks 110, each block 120 being axially adjacent to a respective block 110.

The blocks 120 are circumferentially separated from one another by a respective main transversal groove 125, which is preferably an elongation of the aforementioned main transversal groove 115.

As illustrated in figure 3, the blocks 120 extend mainly along a substantially circumferential direction.

The blocks 120 are also indicated as "substantially circumferential blocks" and will be described in greater detail hereinafter.

The blocks 110 and 120 are axially separated by a circumferential groove 130.

In alternative embodiments that are not illustrated, the tyre 100 has a width smaller than that of the tyre 100 of figure 3 and the circumferential row 120a is not provided.

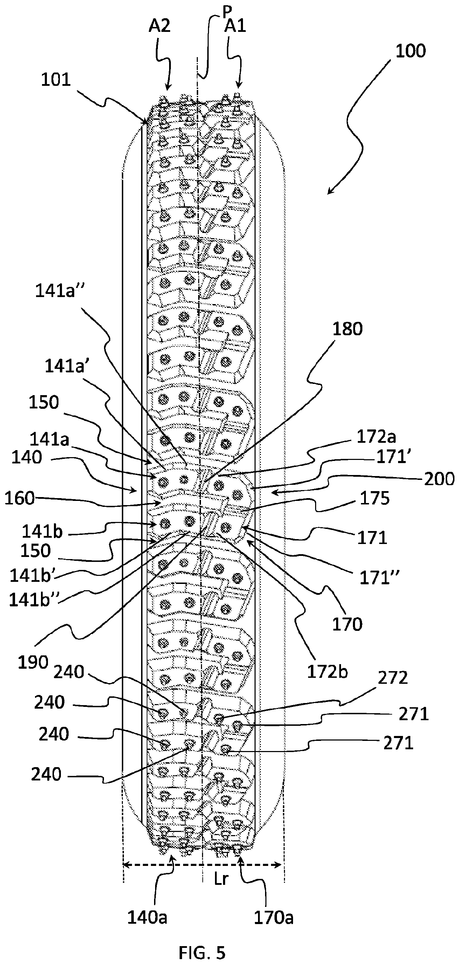

In further alternative embodiments (like for example the one illustrated in figure 5) the tyre 100 has an even smaller width and even the circumferential row 110a is not provided.

The second annular shoulder portion A2 comprises, in the same module 200 which a substantially circumferential block 110 and a substantially circumferential block 120 belong to, a plurality of pairs 140 of blocks, each of which comprising two block portions 141a, 141b.

The pairs 140 of blocks are circumferentially aligned to form a respective circumferential row 140a. For the sake of simplicity of illustration, in figure 3 reference numeral 140 is associated with only one pair of blocks of the circumferential row 140a of blocks.

As illustrated in figure 3, the block portions 141a, 141b of each pair 140 of blocks extend mainly along a substantially axial direction and, preferably, parallel to one another. The block portions 141a, 141b of each pair 140 of blocks are also indicated as "substantially axial block portions" and will be described in greater detail hereinafter.

Each pair 140 of blocks is separated from the circumferentially consecutive pair 140 of blocks by a respective main transversal groove 150.

The substantially axial block portions 141a, 141b of each of the aforementioned pairs 140 of blocks are circumferentially separated by a respective transversal groove 160 of block. For the sake of simplicity of illustration, in figure 3 reference numeral 160 is associated with the transversal groove defined between the substantially axial block portions 141a, 141b of a single pair 140 of blocks of the circumferential row 140a of blocks.

The intermediate annular portion A3 of the tread band 101 comprises, at each module 200, a block portion 170. The block portions 170 of the various modules 200 are circumferentially aligned to form a respective circumferential row 170a of blocks. For the sake of simplicity of illustration, in figure 3 reference numeral 170 is associated with only one block portion of the circumferential row 170a of blocks.

The block portions 170 are circumferentially separated from one another by the aforementioned main transversal groove 150.

Each block portion 170 is axially adjacent to a respective block 110 and to a respective pair 140 of blocks. In particular, as described below, the block portion 170 is separated from the axially adjacent block 110 by a central circumferential groove 185 and is connected to the substantially axial block portions 141a, 141b of a pair 140 of blocks, to define with the latter a single substantially U-shaped block.

In the embodiment illustrated herein the central circumferential groove 185 extends, along the circumferential direction y, entirely in axially more inner position with respect to the equatorial plane P.

As illustrated in figure 4, the block portions 170 comprise a main portion 171 extending mainly along a substantially circumferential direction and intersecting the equatorial plane P, a first secondary portion 172a extending from an end portion of said main portion 171 and substantially perpendicular to the aforementioned main portion 171, and a second secondary portion 172b extending from an end portion of said main portion 171 opposite to that from which the first secondary portion 172a extends and substantially parallel to the first secondary portion 172a.

The block portions 170 will be described in greater detail hereinafter.

The assembly defined by: a substantially circumferential block 110, a substantially circumferential block 120 axially adjacent to the aforementioned substantially circumferential block 110, a pair 140 of blocks axially adjacent to the aforementioned substantially circumferential block 110, a main transversal groove 115 which circumferentially precedes (or follows) the aforementioned substantially circumferential block 110, a main transversal groove 125 which circumferentially precedes (or follows) the aforementioned substantially circumferential block 120 and a main transversal groove 150 which circumferentially precedes (or follows) the aforementioned pair 140 of blocks defines the module 200 of tread band 101 (illustrated in figure 4) that repeats circumferentially a predetermined number of times, depending on the fitting diameter of the tyre 100, to define the entire tread band 101.

The tread band 101 of the tyre 100 preferably has a rubber to void ratio comprised between about 0.4 and about 0.5, for example equal to about 0.46.

The circumferential grooves 130 and 185 and the main transversal grooves 115, 125 and 150 all have the same depth. Such a depth is preferably greater than about 8 mm, more preferably greater than about 10 mm, for example equal to about 12 mm.

In the embodiment illustrated in figures 3 and 4, the substantially circumferential blocks 110 and 120 are identical to each other. In particular, both of them extend circumferentially, and parallel to one another, along a trajectory defined by a zig-zag line (preferably having two changes of direction in each block) and have the same circumferential width and the same axial width.

In the specific example illustrated herein, the circumferential width of the substantially circumferential blocks 110 and 120 is greater than twice the axial width of the aforementioned blocks, in particular more than triple the axial width of the aforementioned blocks.

With reference to figure 4, the substantially circumferential block 110 comprises a first portion 110' axially adjacent to the main portion 171 of the block 170 and a second portion 110" circumferentially adjacent to the first portion 110' and axially adjacent to the main transversal groove 150.

The circumferential groove 130 defined between the substantially circumferential blocks 110 and 120 extends circumferentially along a trajectory defined by a broken or zig-zag line and has an axial width lower than or equal to the axial width of the blocks 110, 120. In the specific example illustrated herein, the axial width of the circumferential groove 130 is lower than or equal to the axial width of the substantially circumferential blocks 110, 120.

The substantially axial block portions 141b preferably have an axial width greater than that of the substantially axial block portions 141a of the same pair 140 of blocks.

The transversal groove 160 has a circumferential width which is correlated to that of the substantially axial block portions 141a, 141b. In particular, the ratio between the circumferential width of the transversal groove 160 and the circumferential width of at least one substantially axial block portion 141a, 141b is comprised between about 0.5 and about 1.5, the extreme values being included, the aforementioned circumferential widths being measured in any circumferential plane that intersects the substantially axial block portions 141a, 141b.

In the example illustrated in figures 3 and 4, the aforementioned ratio is equal to about 1, i.e. the circumferential width of the transversal groove 160 of block is substantially equal to the circumferential width of at least one of the substantially axial block portions 141a, 141b.

The circumferential width of the aforementioned transversal groove 160 of block is preferably equal to the circumferential width of the aforementioned main transversal groove 150.

The aforementioned transversal groove 160 of block extends between the substantially axial block portions 141a, 141b of a pair 140 of blocks until the main portion 171 of a block 170 is reached.

The block portions 170 preferably have a circumferential width smaller than that of the substantially circumferential blocks 110, 120.

The main portion 171 of the block portions 170 has a circumferential width greater than twice the axial width thereof.

The main portion 171 of the block portions 170 has an axial width substantially equal to that of the substantially circumferential blocks 110, 120.

The secondary portions 172a, 172b of the block portions 170 have a circumferential width substantially equal to that of the substantially axial block portions 141a, 141b.

In the specific example illustrated herein, the axial width of the first secondary portion 172a of the block portions 170 is substantially equal to, or slightly greater than, the circumferential width of the aforementioned secondary portion 172a and the axial width of the second secondary portion 172b of the block portions 170 is lower than that of the secondary portion 172a of the block portions 170, preferably lower than half the axial width of the aforementioned second secondary portion 172b, even more preferably lower than one third of the axial width of the aforementioned second secondary portion 172b.

The substantially axial block portions 141a, 141b of each pair 140 of blocks are inclined with respect to the axial direction x by an angle lower than 20°.

In particular, with reference to figure 4, each of the substantially axial block portions 141a, 141b comprises a first portion 141a', 141b' inclined with respect to the axial direction x by a first angle having a value preferably lower than or equal to about 20°, for example equal to about 10°, and a second portion 141a", 141b" which is arranged axially more inner with respect to the first portion 141a', 141b' and inclined with respect to the axial direction x on the same side as the first portion 141a', 141b' and, preferably, by an angle having a value substantially equal to the aforementioned first angle.

Again with particular reference to figure 4, the main portion 171 of the block portion 170 is inclined with respect to the circumferential direction y by an angle lower than 20°.

In particular, the aforementioned main portion 171 of the block portion 170 comprises a first part 171' inclined with respect to the circumferential direction y by a predetermined angle and a second part 171" circumferentially adjacent to the first part 171' and inclined with respect to the circumferential direction y on the same side as the first part 171' and, preferably, by the same angle.

Preferably, the aforementioned angle is lower than or equal to about 20°, more preferably lower than or equal to about 15°, even more preferably lower than or equal to about 10°, for example equal to about 10°.

Preferably, the aforementioned second part of the main portion of the block portion 170 is inclined with respect to said axial direction by an angle lower than or equal to about 20°, for example equal to about 10°.

The main portion 171 of the block portion 170 comprises a surface recess 175 extending along a substantially axial direction.

The surface recess 175 crosses the entire main portion 171 of the block portion 170.

In particular, the surface recess 175 is defined in the first part 171' of the main portion 171 of the block portion 170.

The depth of the surface recess 175 is correlated to that of the transversal groove 160. In particular, the ratio between the depth of the surface recess 175 and the depth of the transversal groove 160 of block is comprised between about 0.1 and about 0.3, the extreme values being included, for example equal to about 0.2.

The secondary portion 172a of the block portion 170 is preferably substantially aligned with a substantially axial block portion 141a.

In particular, in the embodiment illustrated herein, the secondary portion 172a of the block portion 170 is connected to the aforementioned substantially axial block portion 141a through a connection portion at which there is a surface recess 180 extending along a substantially circumferential direction.

The depth of the surface recess 180 is greater than that of the surface recess 175 and, also in this case, it is correlated to that of the transversal groove 160. In particular, the ratio between the depth of the surface recess 180 and the depth of the transversal groove 160 of block is comprised between about 0.3 and about 0.7, the extreme values being included, for example equal to about 0.5.

Similarly, the secondary portion 172b of the block portion 170 is preferably substantially aligned with the block portion 141b.

In particular, in the embodiment illustrated herein, the secondary portion 172b of the block portion 170 is connected to the block portion 141b through a connection portion at which there is a surface recess 190 extending along a substantially circumferential direction.

The depth of the surface recess 190 is greater than that of the surface recess 175 and, also in this case, it is correlated to that of the transversal groove 160. In particular, the ratio between the depth of the surface recess 180 and the depth of the transversal groove 160 of block is comprised between about 0.3 and about 0.7, the extreme values being included, for example equal to that of the surface recess 180.

As illustrated in figures 3 and 4, the tyre 100 comprises, in a preferred embodiment thereof, a plurality of studs on each of the aforementioned substantially circumferential blocks 110 and 120, on each of the aforementioned substantially axial block portions 141a, 141b of each pair 140 of blocks and on each of the block portions 170 axially arranged between the substantially circumferential blocks 110 and 120 and the substantially axial block portions 141a, 141b.

In particular, the substantially circumferential blocks 110 comprise three circumferentially consecutive studs 210 which are arranged offset in the circumferential direction. One of the studs 210 is arranged on the second portion 110" of the substantially circumferential block 110, so as to be axially adjacent to the main transversal groove 150.

The substantially circumferential blocks 120 also comprise three studs 220 arranged offset in the circumferential direction.

The studs 220 are all arranged axially offset with respect to the studs 120.

Each block portion 141a, 141b of each pair 140 of blocks comprises two axially consecutive studs 240. Preferably, one stud 240 is arranged in the portion 141a', 141b' of the respective block portion 141a, 141b and the other stud 240 is arranged in the portion 141a", 141b" of the respective block portion 141a, 141b.

The studs 240 of each of the block portions 141a, 141b of each pair 140 of blocks are arranged offset from one another in the axial direction.

Each of the studs 240 is arranged axially offset with respect to each of the studs 120 and 220.

Each block portion 170 comprises three studs, in particular two circumferentially consecutive studs 271 arranged on the main portion 171 of the block portion 170 and one stud 272 arranged on the secondary portion 172a of the block portion 170.

The studs 271 and 272 are arranged offset from one another in the axial direction and in the circumferential direction and are arranged offset in the axial direction with respect to the studs 210, 220 and 240.

In particular, the two studs 271 are arranged offset in the circumferential direction and are located on opposite sides with respect to the surface recess 175. One of the studs 271 is arranged on the first part 171' of the main portion 171 of the block portion 170 and the other stud 271 is arranged on the second part 171" of the main portion 171 of the block portion 170.

The stud 272 is arranged axially offset with respect to the adjacent stud 271 and with respect to the studs 210, 220 and 240.

The Applicant has perceived that in the case in which the tyre 100 is intended to be used on compact and/or high-grip road surfaces, like for example asphalt, it is preferable the position of the blocks on the tread band to be reversed with respect to what is discussed above.

In particular, it is advisable that the first annular shoulder portion A1 comprises the aforementioned pairs 140 of blocks and the annular shoulder portion A2 comprises the aforementioned substantially circumferential blocks 110 and 120, with the block portions 170 arranged in the intermediate annular portion A3. However, in this case, the secondary portions 172a, 172b face towards the axially more inner side of the tyre 100 and are connected to the block portions 141a, 141b of the pair 140 of axially adjacent blocks. Otherwise, what has been described previously applies.

It is also contemplated to provide a tyre having the blocks 110 and 120 oriented and positioned as discussed in the previous paragraph or, with reference to figures 3 and 4, in the paragraphs that precede the previous paragraph, with the single modification that the block portions 170 are arranged in an axially more outer position with respect to the block portions 141a, 141b of each pair 140 of blocks.

It is also contemplated to provide a tyre having the blocks 110 and 120 oriented and positioned as discussed in the previous paragraph or, with reference to figures 3 and 4, in the paragraphs that precede the previous paragraph, with the single modification that block portions 170 are arranged alternately, along the circumferential direction, in an axially more inner position with respect to the block portions 141a, 141b of the pair 140 of axially adjacent blocks and in an axially more outer position with respect to the block portions 141a, 141b of the pair 140 of axially adjacent blocks.

Figure 5 shows a studded tyre 100 having a low width Lr, for example lower than 145 mm, intended to be used on soft and/or low-grip road surfaces.

The tyre 100 of figure 5 differs from that of figure 3 in that it has only one circumferential row 170a of block portions 170 identical to the block portion 170 of figure 3 and arranged on one side of the equatorial plane P, and one circumferential row 140a of pairs of block portions 140 identical to the pairs 140 of blocks 140 of figure 3 and arranged on the other side of the equatorial plane P. In other words there is no circumferential row 110a of substantially circumferential blocks 110 discussed above, no circumferential row 120a of substantially circumferential blocks 120 discussed above, no circumferential grooves 130 and 185 and no main transversal grooves 115 and 125. Otherwise, everything has described above with reference to the tyre 100 of figures 3 and 4 applies to the tyre 100 of figure 5.

In the tyre 100 of figure 5, instead of at least one of the surface recesses 180 and 190 it is possible to provide a respective circumferential groove. The equatorial plane P bisects the tread band 101 at the surface recess 180 (or at the circumferential groove possibly provided instead).

The tread patterns illustrated in figures 3, 4 and 5 are only examples of a large number of tread patterns that can actually be made according to the specific requirements. Indeed, it is possible to provide tread patterns with first substantially circumferential blocks, second substantially axial block portions and possibly further blocks/block portions axially arranged between the aforementioned first blocks and second block portions, having a different shape and/or size from those of the substantially circumferential blocks 110 and 120, of the substantially axial block portions 141a, 141b and of the block portion 170, respectively, which have been described with reference to figures 3, 4. However, the aforementioned first blocks, second block portions and further blocks/block portions, having a main extension in the circumferential direction, a main extension in the axial direction and possibly a position analogous to that of the block portions 170, respectively, make it possible to achieve the same technical effects discussed above.

Of course, those skilled in the art can bring further modifications and variants to the invention described above in order to satisfy specific and contingent application requirements, said variants and modifications in any case being within the scope of protection defined by the following claims.

## Claims

1. Tyre (100) for vehicle wheels, comprising an equatorial plane (P) and a tread band (101) having a first annular shoulder portion (A1) arranged on one side of said equatorial plane (P) and a second annular shoulder portion (A2) arranged on an axially opposite side to said first annular shoulder portion (A1) with respect to said equatorial plane (P), wherein said tread band (101) comprises a module (200) that includes:
- a pair (140) of second block portions (141a, 141b) arranged in said second annular shoulder portion (A2) and extending mainly along a substantially axial direction, wherein the term "extending mainly along a substantially axial direction" indicates that each of said second block portions (141a, 141b) has an extension along a substantially axial direction greater than the one along a circumferential direction;
- a transversal groove (160) arranged between the block portions (141a, 141b) of said pair (140) of second block portions (141a, 141b);
wherein the ratio between the circumferential width of said transversal groove (160), measured on any circumferential plane that intersects said pair (140) of second block portions (141a, 141b), and the circumferential width of at least one block portion (141a, 141b) of said pair (140) of second block portions (141a, 141b), measured on any circumferential plane that intersects said pair (140) of second block portions (141a, 141b), is greater than, or equal to, 0.5;
wherein said tread band (101) comprises a third block portion (170) having a main portion (171) extending mainly along a substantially circumferential direction and connected to a first block portion (141a) of said pair (140) of second block portions (141a, 141b) to form a single block with said first block portion (141a), wherein the term "extending mainly along a substantially circumferential direction" indicates that said third block portion (170) has an extension along a substantially circumferential direction greater than the one along an axial direction;
wherein the pair (140) of second block portions (141a, 141b) is arranged in an axially more outer shoulder portion of the tread band (101) and the main portion (171) is arranged in an axially more inner shoulder portion of the tread band (101), wherein the term "axially more outer" indicates a position axially farther to a vehicle on which the tyre will be mounted and the term "axially more inner" indicates a position axially closer to the vehicle on which the tyre will be mounted.

2. Tyre (100) according to claim 1, wherein the circumferential width of said transversal groove (160) is substantially equal to the circumferential width of said at least one block portion (141a, 141b) of said pair (140) of second block portions (141a, 141b).

3. Tyre (100) according to claim 1 or 2, wherein said tread band (101) has a rubber to void ratio greater than 0.4, preferably greater than 0.45.

4. Tyre (100) according to any of the previous claims, wherein said main portion (171) of said third block portion (170) intersects said equatorial plane (P).

5. Tyre (100) according to any of the previous claims, wherein said main portion (171) of said third block portion (170) comprises a first surface recess (175) extending along a substantially axial direction.

6. Tyre (100) according to any one of the previous claims, wherein said third block portion (170) comprises a first secondary portion (172a) extending mainly along a substantially axial direction and connected to said first block portion (141a) of said pair (140) of second block portions (141a, 141b).

7. Tyre (100) according to claim 6, wherein said tread band (101) comprises a second surface recess (180) arranged between said first secondary portion (172a) of said third block portion (170) and said first block portion (141a) of said pair (140) of second block portions (141a, 141b) and extending along a substantially circumferential direction.

8. Tyre (100) according to claim 7 when depending on claim 5, wherein said second surface recess (180) has a depth greater than that of said first surface recess (175).

9. Tyre (100) according to any one of the previous claims, wherein said third block portion (170) comprises a second secondary portion (172b) extending mainly along a substantially axial direction and connected to a second block portion (141b) of said pair (140) of second block portions (141a, 141b) to form a single block with said second block portion (141b).

10. Tyre (100) according to claim 9, wherein said tread band (101) comprises a third surface recess (190) arranged between said second secondary portion (172b) of said third block portion (170) and said second block portion (141b) of said pair (140) of second block portions (141a, 141b) and extending along a substantially circumferential direction.

11. Tyre (100) according to any of the previous claims, wherein said module (200) further comprises a first block (110) extending mainly along a substantially circumferential direction.

12. Tyre (100) according to claim 11, wherein said first annular shoulder portion (A1) comprises at least one fourth block (120) extending mainly along a substantially circumferential direction, said at least one fourth block (120) being axially adjacent to said first block (110) and separated from said first block (110) by a circumferential groove (130).

13. Tyre (100) according to claim 11 or 12, wherein said first block (110) comprises at least two circumferentially consecutive studs (210) which are arranged offset in the circumferential direction, and each block portion (141a, 141b) of said pair (140) of second block portions (141a, 141b) comprises at least two axially consecutive studs (240) which are arranged offset in the axial direction.

14. Tyre (100) according to claims 13, wherein all of the studs (241, 242) of said first block (110) are arranged offset in the axial direction with respect to all of the studs (240) of the block portions (141a, 141b) of said pair (140) of second block portions (141a, 141b).

15. Tyre (100) according to any of the previous claims, wherein said main portion (171) of said third block portion (170) comprises at least two circumferentially consecutive studs (271) which are arranged offset in the circumferential direction and said first secondary portion (172a) of said third block portion (170) comprises at least one stud (272).

16. Tyre (100) according to claim 15 when depending on claim 6, wherein all of the studs (271, 272) of said third block portion (170) are arranged offset from one another in the axial direction and in the circumferential direction and offset in the axial direction with respect to the studs (240) of the block portions (141a, 141b) of said pair (140) of second block portions (141a, 141b).

## Patentansprüche

1. Reifen (100) für Fahrzeugräder, umfassend eine Äquatorialebene (P) und eine Lauffläche (101) mit einem ersten ringförmigen Schulterabschnitt (A1), der auf einer Seite der Äquatorialebene (P) angeordnet ist, und einem zweiten ringförmigen Schulterabschnitt (A2), der auf einer axial gegenüberliegenden Seite des ersten ringförmigen Schulterabschnitts (A1) in Bezug auf die Äquatorialebene (P) angeordnet ist, wobei die Lauffläche (101) ein Modul (200) umfasst, das Folgendes beinhaltet:
- ein Paar (140) zweiter Blockabschnitte (141a, 141b), die in dem zweiten ringförmigen Schulterabschnitt (A2) angeordnet sind und sich hauptsächlich entlang einer im Wesentlichen axialen Richtung erstrecken, wobei der Begriff "sich hauptsächlich entlang einer im Wesentlichen axialen Richtung erstrecken" angibt, dass jeder der zweiten Blockabschnitte (141a, 141b) eine Erweiterung entlang einer im Wesentlichen axialen Richtung aufweist, die größer als die entlang einer Umfangsrichtung ist;
- eine Quernut (160), die zwischen den Blockabschnitten (141a, 141b) des Paars (140) zweiter Blockabschnitte (141a, 141b) angeordnet ist;
wobei das Verhältnis zwischen der Umfangsbreite der Quernut (160), gemessen auf jeglicher Umfangsebene, die das Paar (140) zweiter Blockabschnitte (141a, 141b) schneidet, und der Umfangsbreite von mindestens einem Blockabschnitt (141a, 141b) des Paars (140) zweiter Blockabschnitte (141a, 141b), gemessen auf jeglicher Umfangsebene, die das Paar (140) zweiter Blockabschnitte (141a, 141b) schneidet, größer als oder gleich wie 0,5 ist;
wobei die Lauffläche (101) einen dritten Blockabschnitt (170) umfasst, der einen Hauptabschnitt (171), der sich hauptsächlich entlang einer im Wesentlichen Umfangsrichtung erstreckt, aufweist und mit einem ersten Blockabschnitt (141a) des Paars (140) zweiter Blockabschnitte (141a, 141b) verbunden ist, um einen einzelnen Block mit dem ersten Blockabschnitt (141a) zu bilden, wobei der Begriff "sich hauptsächlich entlang einer im Wesentlichen Umfangsrichtung erstreckt" angibt, dass der dritte Blockabschnitt (170) eine Erweiterung entlang einer im Wesentlichen Umfangsrichtung aufweist, die grö0er als die entlang einer axialen Richtung ist;
wobei das Paar (140) zweiter Blockabschnitte (141a, 141b) in einem axial weiter äußeren Schulterabschnitt der Lauffläche (101) angeordnet ist und der Hauptabschnitt (171) in einem axial weiter inneren Schulterabschnitt der Lauffläche (101) angeordnet ist, wobei der Begriff "axial weiter äußeren" eine Position axial weiter von einem Fahrzeug entfernt angibt, an dem der Reifen montiert werden wird, und der Begriff "axial weiter inneren" eine Position axial näher an dem Fahrzeug angibt, an dem der Reifen montiert werden wird.

2. Reifen (100) nach Anspruch 1, wobei die Umfangsbreite der Quernut (160) im Wesentlichen gleich wie die Umfangsbreite des mindestens einen Blockabschnitts (141a, 141b) des Paars (140) zweiter Blockabschnitte (141a, 141b) ist.

3. Reifen (100) nach Anspruch 1 oder 2, wobei die Lauffläche (101) ein Gummi-zu-Hohlraum-Verhältnis hat, das größer als 0,4 ist, bevorzugt größter als 0,45.

4. Reifen (100) nach einem der vorhergehenden Ansprüche, wobei der Hauptabschnitt (171) des dritten Blockabschnitts (170) die Äquatorialebene (P) schneidet.

5. Reifen (100) nach einem der vorhergehenden Ansprüche, wobei der Hauptabschnitt (171) des dritten Blockabschnitts (170) eine erste Oberflächenvertiefung (175) umfasst, die sich entlang einer im Wesentlichen axialen Richtung erstreckt.

6. Reifen (100) nach einem der vorhergehenden Ansprüche, wobei der dritte Blockabschnitt (170) einen ersten sekundären Abschnitt (172a) umfasst, der sich hauptsächlich entlang einer im Wesentlichen axialen Richtung erstreckt und mit dem ersten Blockabschnitt (141a) des Paars (140) zweiter Blockabschnitte (141a, 141b) verbunden ist.

7. Reifen (100) nach Anspruch 6, wobei die Lauffläche (101) eine zweite Oberflächenvertiefung (180) umfasst, die zwischen dem ersten sekundären Abschnitt (172a) des dritten Blockabschnitts (170) und dem ersten Blockabschnitt (141a) des Paars (140) zweiter Blockabschnitte (141a, 141b) angeordnet ist und sich entlang einer im Wesentlichen Umfangsrichtung erstreckt.

8. Reifen (100) nach Anspruch 7, wenn abhängig von Anspruch 5, wobei die zweite Oberflächenvertiefung (180) eine Tiefe aufweist, die größer als die der ersten Oberflächenvertiefung (175) ist.

9. Reifen (100) nach einem der vorhergehenden Ansprüche, wobei der dritte Blockabschnitt (170) einen zweiten sekundären Abschnitt (172b) umfasst, der sich hauptsächlich entlang einer im Wesentlichen axialen Richtung erstreckt und mit einem zweiten Blockabschnitt (141b) des Paars (140) zweiter Blockabschnitte (141a, 141b) verbunden ist, um einen einzelnen Block mit dem zweiten Blockabschnitt (141b) zu bilden.

10. Reifen (100) nach Anspruch 9, wobei die Lauffläche (101) eine dritte Oberflächenvertiefung (190) umfasst, die zwischen dem zweiten sekundären Abschnitt (172b) des dritten Blockabschnitts (170) und dem zweiten Blockabschnitt (141b) des Paars (140) zweiter Blockabschnitte (141a, 141b) angeordnet ist und sich entlang einer im Wesentlichen Umfangsrichtung erstreckt.

11. Reifen (100) nach einem der vorhergehenden Ansprüche, wobei das Modul (200) ferner einen ersten Block (110) umfasst, der sich hauptsächlich entlang einer im Wesentlichen Umfangsrichtung erstreckt.

12. Reifen (100) nach Anspruch 11, wobei der erste ringförmige Schulterabschnitt (A1) mindestens einen vierten Block (120) umfasst, der sich hauptsächlich entlang einer im Wesentlichen Umfangsrichtung erstreckt, wobei der mindestens eine vierte Block (120) axial zu dem ersten Block (110) benachbart und von dem ersten Block (110) durch eine Quernut (130) getrennt ist.

13. Reifen (100) nach Anspruch 11 oder 12, wobei der erste Block (110) mindestens zwei in Umfangsrichtung aufeinanderfolgende Spikes (210) umfasst, die versetzt in der Umfangsrichtung angeordnet sind, und jeder Blockabschnitt (141a, 141b) des Paars (140) zweiter Blockabschnitte (141a, 141b) mindestens zwei axial aufeinanderfolgende Spikes (240) umfasst, die versetzt in der axialen Richtung angeordnet sind.

14. Reifen (100) nach Ansprüchen 13, wobei alle Spikes (241, 242) des ersten Blocks (110) versetzt in der axialen Richtung angeordnet sind in Bezug auf alle Spikes (240) der Blockabschnitte (141a, 141b) des Paars (140) zweiter Blockabschnitte (141a, 141b).

15. Reifen (100) nach einem der vorhergehenden Ansprüche, wobei der Hauptabschnitt (171) des dritten Blockabschnitts (170) mindestens zwei in Umfangsrichtung aufeinanderfolgende Spikes (271) umfasst, die versetzt in der Umfangsrichtung angeordnet sind, und der erste sekundäre Abschnitt (172a) des dritten Blockabschnitts (170) mindestens einen Spike (272) umfasst.

16. Reifen (100) nach Anspruch 15, wenn abhängig von Anspruch 6, wobei alle Spikes (271, 272) des dritten Blockabschnitts (170) versetzt voneinander in der axialen Richtung und in der Umfangsrichtung und versetzt in der axialen Richtung in Bezug auf die Spikes (240) der Blockabschnitte (141a, 141b) des Paars (140) zweiter Blockabschnitte (141a, 141b) angeordnet sind.

## Revendications

1. Pneu (100) pour roues de véhicule, comprenant un plan équatorial (P) et une bande de roulement (101) ayant une première partie épaulement annulaire (A1) agencée sur un côté dudit plan équatorial (P) et une seconde partie épaulement annulaire (A2) agencée sur un côté axialement opposé relativement à ladite première partie épaulement annulaire (A1) par rapport audit plan équatorial (P), dans lequel ladite bande de roulement (101) comprend un module (200) qui inclut
- une paire (140) de deuxièmes parties blocs (141a, 141b) agencées dans ladite seconde partie épaulement annulaire (A2) et s'étendant principalement le long d'une direction sensiblement axiale, dans lequel le terme « s'étendant principalement le long d'une direction sensiblement axiale » indique que chacune desdite deuxièmes parties blocs (141a, 141b) a une extension, le long d'une direction sensiblement axiale, supérieure à l'une le long d'une direction circonférentielle ;
- une rainure transversale (160) agencée entre les parties blocs (141a, 141b) de ladite paire (140) de deuxièmes parties blocs (141a, 141b) ;
dans lequel le rapport entre la largeur circonférentielle de ladite rainure transversale (160), mesurée sur un quelconque plan circonférentiel qui intersecte ladite paire (140) de deuxièmes parties blocs (141a, 141b), et la largeur circonférentielle d'au moins une partie bloc (141a, 141b) de ladite paire (140) de deuxièmes parties blocs (141a, 141b), mesurée sur un quelconque plan circonférentiel qui intersecte ladite paire (140) de deuxièmes parties blocs (141a, 141b), est supérieur, ou égal, à 0,5 ;
dans lequel ladite bande de roulement (101) comprend une troisième partie bloc (170) ayant une partie principale (171) s'étendant principalement le long d'une direction sensiblement circonférentielle et reliée à une première partie bloc (141a) de ladite paire (140) de deuxièmes parties blocs (141a, 141b) pour former un seul bloc avec ladite première partie bloc (141a), dans lequel le terme « s'étendant principalement le long d'une direction sensiblement circonférentielle » indique que ladite troisième partie bloc (170) a une extension le long d'une direction sensiblement circonférentielle supérieure à l'une le long d'une direction axiale ;
dans lequel la paire (140) de deuxièmes parties blocs (141a, 141b) est agencée dans une partie épaulement axialement plus extérieure de la bande de roulement (101) et la partie principale (171) est agencée dans une partie épaulement axialement plus intérieure de la bande de roulement (101), dans lequel le terme « axialement plus extérieur » indique une position axialement plus éloignée d'un véhicule sur lequel le pneu sera monté et le terme « axialement plus intérieur » indique une position axialement plus près du véhicule sur lequel le pneu sera monté.

2. Pneu (100) selon la revendication 1, dans lequel la largeur circonférentielle de ladite rainure transversale (160) est sensiblement égale à la largeur circonférentielle de ladite au moins une partie bloc (141a, 141b) de ladite paire (140) de deuxièmes parties blocs (141a, 141b).

3. Pneu (100) selon la revendication 1 ou 2, dans lequel ladite bande de roulement (101) a un rapport caoutchouc/vide supérieur à 0,4, de préférence supérieur à 0,45.

4. Pneu (100) selon l'une quelconque des revendications précédentes, dans lequel ladite partie principale (171) de ladite troisième partie bloc (170) intersecte ledit plan équatorial (P).

5. Pneu (100) selon l'une quelconque des revendications précédentes, dans lequel ladite partie principale (171) de ladite troisième partie bloc (170) comprend un premier évidement de surface (175) s'étendant le long d'une direction sensiblement axiale.

6. Pneu (100) selon l'une quelconque des revendications précédentes, dans lequel ladite troisième partie bloc (170) comprend une première partie secondaire (172a) s'étendant principalement le long d'une direction sensiblement axiale et reliée à ladite première partie bloc (141a) de ladite paire (140) de deuxièmes parties blocs (141a, 141b).

7. Pneu (100) selon la revendication 6, dans lequel ladite bande de roulement (101) comprend un deuxième évidement de surface (180) agencé entre ladite première partie secondaire (172a) de ladite troisième partie bloc (170) et ladite première partie bloc (141a) de ladite paire (140) de deuxièmes parties blocs (141a, 141b) et s'étendant le long d'une direction sensiblement circonférentielle.

8. Pneu (100) selon la revendication 7 lorsqu'elle dépend de la revendication 5, dans lequel ledit deuxième évidement de surface (180) a une profondeur supérieure à celle dudit premier évidement de surface (175).

9. Pneu (100) selon l'une quelconque des revendications précédentes, dans lequel ladite troisième partie bloc (170) comprend une seconde partie secondaire (172b) s'étendant principalement le long d'une direction sensiblement axiale et reliée à une deuxième partie bloc (141b) de ladite paire (140) de deuxièmes parties blocs (141a, 141b) pour former un seul bloc avec ladite deuxième partie bloc (141b).

10. Pneu (100) selon la revendication 9, dans lequel ladite bande de roulement (101) comprend un troisième évidement de surface (190) agencé entre ladite seconde partie secondaire (172b) de ladite troisième partie bloc (170) et ladite deuxième partie bloc (141b) de ladite paire (140) de deuxièmes parties blocs (141a, 141b) et s'étendant le long d'une direction sensiblement circonférentielle.

11. Pneu (100) selon l'une quelconque des revendications précédentes, dans lequel ledit module (200) comprend en outre un premier bloc (110) s'étendant principalement le long d'une direction sensiblement circonférentielle.

12. Pneu (100) selon la revendication 11, dans lequel ladite première partie épaulement annulaire (A1) comprend au moins un quatrième bloc (120) s'étendant principalement le long d'une direction sensiblement circonférentielle, ledit au moins un quatrième bloc (120) étant axialement adjacent audit premier bloc (110) et séparé dudit premier bloc (110) par une rainure circonférentielle (130).

13. Pneu (100) selon la revendication 11 ou 12, dans lequel ledit premier bloc (110) comprend au moins deux crampons circonférentiellement consécutifs (210) qui sont agencés de façon décalée dans la direction circonférentielle, et chaque partie bloc (141a, 141b) de ladite paire (140) de deuxièmes parties blocs (141a, 141b) comprend au moins deux crampons axialement consécutifs (240) qui sont agencés de façon décalée dans la direction axiale.

14. Pneu (100) selon la revendication 13, dans lequel tous les crampons (241, 242) dudit premier bloc (110) sont agencés de façon décalée dans la direction axiale par rapport à tous les crampons (240) des parties blocs (141a, 141b) de ladite paire (140) de deuxièmes parties blocs (141a, 141b).

15. Pneu (100) selon l'une quelconque des revendications précédentes, dans lequel ladite partie principale (171) de ladite troisième partie bloc (170) comprend au moins deux crampons circonférentiellement consécutifs (271) qui sont agencés de façon décalée dans la direction circonférentielle et ladite première partie secondaire (172a) de ladite troisième partie bloc (170) comprend au moins un crampon (272).

16. Pneu (100) selon la revendication 15 lorsqu'elle dépend de la revendication 6, dans lequel tous les crampons (271, 272) de ladite troisième partie bloc (170) sont agencés de façon décalée les uns relativement aux autres dans la direction axiale et dans la direction circonférentielle et de façon décalée dans la direction axiale par rapport aux crampons (240) des parties blocs (141a, 141b) de ladite paire (140) de deuxièmes parties blocs (141a, 141b).
